# EUROPEAN PATENT APPLICATION

(11) **EP 1 469 372 A2**
(43) Date of publication of application: **20.10.2004**
(21) Application number: 04252256.5
(22) Date of filing: 16.04.2004
(51) Int. Cl.: G06F 1/00

(54) **User authentication using rhythmic passwords**

(30) Priority: 16.04.2003 US 414886
(71) Applicant: AT&T Corp., New York, NY 10013-2412 (US)
(72) Inventor: Smith, Thomas M., Westfield, New Jersey 07090 (US); Cheung, Eric, New York 10003 (US)
(74) Representative: Suckling, Andrew Michael

(57) **Abstract**

A password authentication system uses a password comprising of characters as well as the duration of the depressed characters and the duration of the pauses between each subsequent character entered. The rhythm of the password as it is entered into the authentication system is used to validate the authenticity of the user.

## Description

### Field of the Invention

The disclosed invention broadly relates to a method and system for using the rhythm of data entered as a password to provide an added level of password access security.

### Background of the Invention

The use of passwords is perhaps the weakest link in network security access. To ensure network security, network administrators have gone to various lengths to establish policies and practices which will maintain network integrity. Under the simplest of network security polices, network access requires at minimum the use of a password. Often, selection of these passwords is governed by a strict set of guidelines. For example, the password must be at least 8 alpha-numeric characters. However, the difficulty of memorizing multiple passwords and remembering which password is associated with what account has caused many individuals to reuse the same password for all accounts. Under these circumstances, the disclosure or theft of that one password may have un-tolled consequences and compromise not only the security of the network but the security of any and all non-network based accounts having that same access password.

As an alternative, some network administrators have instituted the use of token cards that display a six-digit number generated in accordance with a predefined algorithm. The access number on the token card changes every 30 seconds. To log-in to a system, the access number displayed on the token card must be entered within the time frame the six digit number is displayed on the token card. However, many individuals have become frustrated with the use of these cards, since often the displayed digits are not synchronized with the network responsible for authenticating the displayed and entered six digit passwords- resulting in the repeated re-entry of a changing password. Moreover, users of these token cards often misplace these token cards- rendering the user unable to access their computers and/or networks and in effect defeating the very purpose of having controlled access.

Biometrics is the newest approach to network security that uses some physical characteristic of an individual to uniquely identify an authorized user (i.e., retinal scanning and voice print matching). ln the most popular biometric system, a small pad is used to detect and match an individual's fingerprints with those on file. Only upon an exact matching of the fingerprint will access be granted. Although such biometric systems are promising, they are currently very expensive and are prone to denial of access logistical problems.

Accordingly, there is a need for a method and system for accessing a network, location, or any secured area which is simple, inexpensive and not prone to denying access. The present invention attains these attributes by providing a method and system which utilizes the entry of a password in-step with a predefined rhythm.

### Summary

The present invention provides a method and system for providing an additional layer of password security. A password authentication system uses a password comprising of characters as well as the duration the keys of a keypad are pressed and the duration of the pauses between each subsequent character entered. The rhythm of the entry of the password characters into an authentication system is used to validate the authenticity of a user.

### Brief Description of the Drawings

These and other features of the present invention will best be understood by reference to the following brief description of a preferred embodiment of the invention, taken in conjunction with accompanying drawings, in which:
Fig. 1 illustrates a functional block diagram of an authentication system;
Fig. 2 is a graphical representation of a rhythmic password;
Fig. 3 illustrates a functional block diagram of an alternate embodiment of the present invention in which an authentication system uses DTMF signaling; and
Fig. 4 is a tone table used in the generation of tones in accordance with the DTMF authentication system shown in Fig. 3.

### Detailed Description

The present invention generally relates to a method and system for using rhythm for providing an added level of password access security. Although the present invention is generally described in the context of using DTMF signaling in a rhythmic way and in a telephone system environment, it has broader applications. ln particular, the invention may be used at non-DTMF based points-of-access, such as stand-alone access to laptop computers and the like, and in situations where rhythmic key stroke entries may be correlated with the duration of, and pauses between, each character entered.

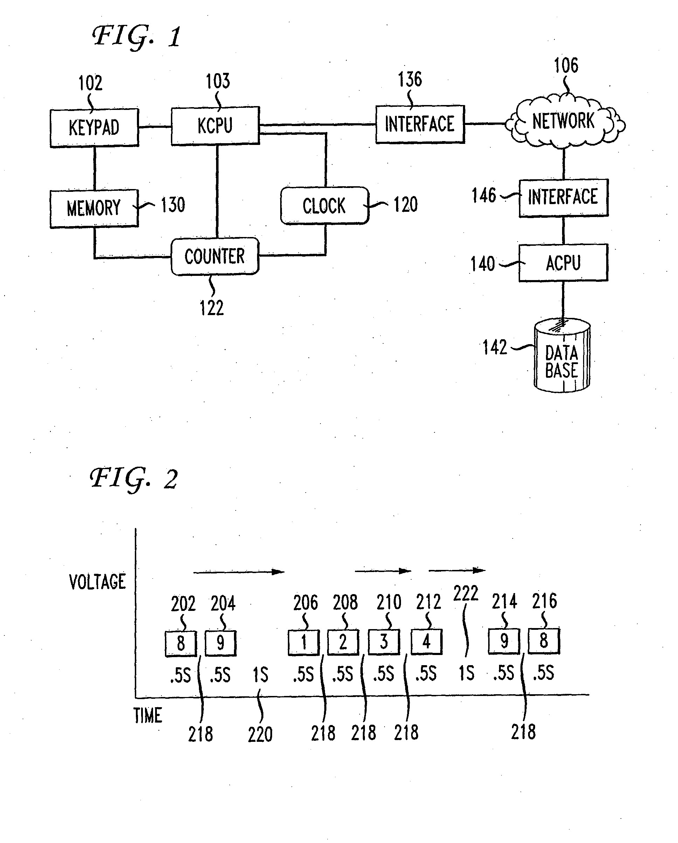

Fig. 1 illustrates a functional block diagram of a password authentication system. Keypad 102 is the point-of-entry or device by which a user attempting to gain access to a network, a computer or other secured location or device is required to enter an authorized password for authentication. The keypad 102 may take various forms including a telephone touch-tone keypad, tactile keypad, computer keyboard or touch-screen keypads. In the embodiment shown in Fig.1, the keypad 102 is connected to a keypad central processing unit 103 (KCPU). The connection between the keypad 120 and the KCPU 103 is configured such that each key on the keypad 102 correlates with a character. For purposes of clarity and discussion, any reference herein to a character should be understood to mean any printable or non-printable digit, character or symbol. Also it should be understood that Keypads 102, 302 or any other point-of-entry device must be able to signal the KCPUs 103, 304, the duration of time that the key on the Keypads 102, 304 are pressed or activated. For example, the Keypads 102, 302 may continuously provide the KCPUs 103, 304, with a continuous signal indicating the continued activation of the key or provide a signal when the key is activated and another signal when the key is released. The signal sent to the KCPUs 103, 304 may be a continuous transmission of the signal representative of the character or a set/reset signal. ln this manner, the duration of the characters pressed or entered on the Keypads 102, 302 can be determined. The KCPU 103 detects each of the entered characters as well as the duration of the characters and pauses between characters. Moreover, the KCPU 103 correlates and stores each of the characters with an associated character and pause duration in memory 130. ln addition, the KCPU 103 utilizes a clock 120 to drive a counter 122 to ascertain the duration of the received character. The clock 120 is designed to operate within the desired resolution of time needed to detect the duration of the received character. For example, upon the detection of a first character, the KCPU 103 starts the counter 122 to measure the number of pulses received from clock 120. Each pulse received is a measure of the elapsed time or duration of the entered character. The clock 120 for example may send the counter 122, a pulse every 4 ms or 250 pulses per second. Upon the detection by the KCPU 103 that the key corresponding to that character has been released, the KCPU 103 sends a command to the counter 122 to total the number of pulses received and calculate, store and correlate the duration that the key was pressed (character duration data) with the character just entered. ln this manner, the character just entered is correlated with the character duration and entered in memory 130. lmmediately, thereafter, the KCPU 103 instructs counter 122 to immediately reset and to immediately begin to count the duration of the pause (pause duration) between the first character detected and the subsequent character detected by the KCPU 103. The pause duration is then entered in memory 130. Operationally, the KCPU 103 must be able to distinguish based on a predetermined timeframe, whether a period of inactivity is an intentional pause between characters or is merely the time necessary for a transition to the next character. This determination may be made by applying a selectable threshold window upon which further inactivity must be determined to indicate an intentional pause. In addition, the KCPU 103 will monitor and determine based on clock pulses received by clock 120, when no further characters are expected. More specifically, the determination of when the process of entering a password has ended may depend upon a time-out window during which if no further characters are entered, an entry termination status is declared by KCPU 103. Alternatively, an entry termination status may be determined logistically, by detecting the maximum or expected number of characters necessary to create a valid password or by detecting a delimiter such as "#". As each character is entered and detected, the duration of the character and the pause duration between each character (if any) is stored in memory 130.

Shown in Fig. 2, is a graphical illustration of an eight digit password "89123498" in accordance with the invention and as detected and stored by KCPU 103. The first two characters "89", 202, 204 are entered for a duration of .5 seconds followed by a 1 second pause 220, followed by the next four characters "1234", 206, 208, 210, 212 each having a duration of .5 seconds, followed by a 1 second pause 222 and ending with the last two characters "98" 214, 216 each having a duration of.5 seconds. It should be noted that to distinguish between a transition period and a pause in this example, a pause requires a period of inactivity greater than .25 seconds 220, 222- followed by next character. Conversely, a transition period requires a period of inactivity less than or equal to .25 seconds 218.

The entry of the password comprised of the eight characters is entered in a rhythmic pattern translatable into a series of character durations (.5 seconds) and intervening pauses (1 second) between the subsequent entries of the characters. ln the example shown in Fig. 2, the password "89123498" is entered in a 2-4-2 rhythm whereby the first two characters of the password are entered in a quick succession of a two character entry followed by a pause, followed by a quick four character entry, followed by a pause and finally ending with a quick two character entry. In this manner, the "password" comprises not only the actual characters entered, but the duration of each character, and the duration and location of the pauses in the sequence of entering all of the characters. It should be understood that the above example, describes the rhythm in 2-4-2 format of character and pause durations. However, in practice, the rhythm of a password is better appreciated by using the rhythmic password in-step with a "beat". Depending on the length of the password, a password may be entered to the beat of a familiar tune such as the "Pink Panther Theme" or other memorable beats.

The password shown in Fig. 2 and as discussed above is only an illustration of a possible combination. It should be further understood that based on the configuration of the system used to accept and decode the password entered, the duration of any character entered may span a time period entirely selectable by the user through software used by the KCPU 103 and the authentication processors (ACPU) 140, 314 to recognize the characters, and the duration of the pauses and the duration of the characters. For example, the duration of a character or pause may span 2x, 3x or 4x etc. of the .5 seconds and 1 second shown in Fig.2 or in multiples of any integer or non-integer. The duration of any character or pause may be independently established during the password set-up process. Alternatively, a rhythmic password may comprise the repetition of the password characters with different character and pause durations during the repetition of the password so as to mimic the beat of well known or memorable tunes.

To set-up a password, a user is requested to enter the password in a pre-selected rhythm that will become part of the authentication process. Upon the entry of the characters comprising the password in rhythmic form, the authentication processor 140 detects each of the characters of the password as well as the duration of the pressed characters and the duration of the pause between characters. The characters and related pauses and character durations are stored in an authentication database 142. To verify and to detect the password more reliably, the password is preferably entered in rhythmic form several times. During each entry of the rhythmic password, an average and allowable deviation from the average is calculated by the authentication processor 140 in accordance with a predetermined algorithm. The algorithm for example, may simply use a statistical approach to authentication. More specifically, the algorithm may employ the use of standard deviations as ranges within which character duration or pause duration (duration windows) may deviate and still remain within an acceptable duration window for purposes of authentication. For example, an average digit duration of .5 seconds may have an authentication duration window of .45 to .55 seconds. Moreover, the acceptable duration windows for character and pause duration are constantly updated during each subsequent rhythmic password entry. ln this manner, the rhythmic password will in effect become fine tuned to the rhythmic variations of the user.

Referring back to Fig. 1, the rhythmic password entered in the example above is stored in memory 130. When the rhythmic password has been completely entered, KCPU 103 will establish a connection with the authentication processor 140. The authentication processor 140 may be a remote or local processor. More specifically, the authentication processor 140 may be located within the same housing as the KCPU 103 as in a laptop computer or authentication device, or may be located at a remote processing site. The stored rhythmic password is then forwarded directly or indirectly to the authentication processor 140. In the event that the authentication processor 140 is remotely located, a communications link through network 106 is established with the authentication processor 140 through interface 136. Depending on the network 106, interface 136 may take the form of a dial-up modem, cable modem, ISDN or DSL modem, lP network interface and the like. The rhythmic password is then forwarded or transmitted to the authentication processor 140 where an immediate look-up is conducted in the authentication database 142. The rhythmic password is transmitted as data to the authentication processor 140 in the format and data structure used in network 106. The rhythmic password containing the entered characters and associated character and pause durations are compared to the stored character and character and pause durations established by the user at the time of set-up and modified during subsequent use by the algorithm used to accommodate variability in the character and pause durations. Only in the event that the rhythmic password is entered in accordance with the stored character information and rhythmic pattern represented by the characters and character and pause durations, will a subsequent authorization request be granted. It should be understood that each character and the pauses between each character may have its own unique duration.

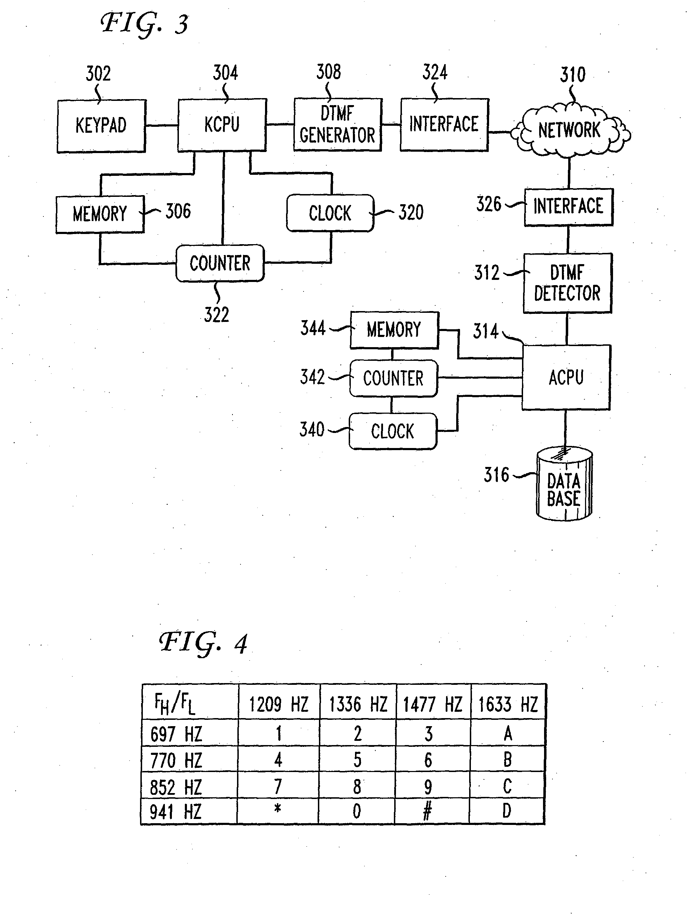

An alternate embodiment of the present invention is shown in Fig.3 in which the characters and character and pause durations are transmitted to a remote location via a touch-tone generator. Keypad 302 like keypad 102 used in the first embodiment is a device by which a user attempting to gain access to a network, computer or other secured location or device is required to enter an authorized password for authentication. Keypad 302 may take various forms including a telephone touch-tone keypad, tactile keypad, computer keyboard or touch-screen keypads. As shown in Fig. 3, keypad 302 is connected to a processor or central processing unit 304 (KCPU). The connection between keypad 302 and KCPU 304 is configured such that each key on the keypad 302 correlates with a character. The KCPU 304 detects each of the entered characters as well as the duration of the characters and the pauses between characters. Moreover, the KCPU 304 correlates and stores each of the characters with an associated character and pause duration in memory 306.
KCPU 304 is connected to a Dual Tone Multiple Frequency (DTMF) generator 308 for the creation of touch-tone signals representative of the characters entered on keypad 302. More specifically, the KCPU 304 detects the characters pressed as well as the time during which a particular key is released. The characters and character and pause durations are determined and stored in the same manner as discussed in the earlier embodiment above. A counter 322 and clock 320 are used to determine the duration of a pressed key as well as the pause duration between the subsequent character entries.

The data stored in memory 306 is applied to DTMF generator 308 to convert the stored data into a series of combination tones representative of the characters entered on keypad 302. The duration of each character or pause is directly represented by the duration of the tones created by DTMF generator 308 and the period of inactivity or pauses between tones (pause duration). For example, if the same rhythmic password code shown in Fig. 2 ("89123498") is used in the current embodiment, each of the digits are represented by a combination of two tones and the duration of the digit is represented by the duration the DTMF generator 308 generates and transmits the tone combination to a DTMF detector 312. The DTMF detector 312 identifies the tonal components to determine the character entered. Moreover, the DTMF detector 312 signals the authentication processor 314 the presence of the tonal components of each character for as long as it receives such tonal components. ln reverse fashion, the authentication data then uses the associate clock 340, counter 342 and memory 344 to detect pause and character durations.

Shown in Fig. 4 is a DTMF tone table used to generate the tones representative of the digits and characters available for use in the creation of a rhythmic password in accordance with the present embodiment. The DTMF generator 308 is capable of generating 16 distinct signals by using eight (8) signal frequencies within a frequency range of 697 Hz to 1633 Hz. However, the actual signals generated are a direct algebraic summation of the amplitudes of two sine waves (or cosine waves) of two different frequencies. More specifically, the generated signal is a composite of a low frequency signal within the range of 697 to 941 Hz and a high frequency signal within the range of 1209 and 1633 Hz. The signal pairs (f_{L} and f_{H}) are designated by the standard touch-tone dialing scheme of a standard telephone (i.e., 1,2,3,4,5,6,7,8,9,0,* and #). For example, the first digit of the rhythmic password referenced above is an "8", that requires the combination of a low frequency of 852 Hz and a high frequency of 1336 Hz.

To transmit the rhythmic password of Fig. 2, to an authentication processor 314, the KCPU 304 retrieves the stored password data from memory 306 and selectively enables the DTMF generator 308 to generate and transmit an "8" 202 through a tonal combination of an 852 Hz and a 1336 Hz composite signal. The associated .5 second duration of the first character is represented by enabling the DTMF generator 308 to transmit the tone pairs for character "8" for a period of .5 seconds. The pause duration 220 between the characters "9" and "1" for example is likewise, represented by a period of inactivity or no transmission of a tonal pair, for a period of 1 second. The process is then applied sequentially and repeated for all the remaining characters, and pauses.

The authentication processor 314 may be local or remote and may necessitate the use of a communications network to relay the rhythmic password to the authentication processor 314. In the event that a communications networks such as the PSTN is necessary, the DTMF generator 308 may either directly or through an interface 324 such as a dial-up modem, access a network 310 for the transmission of the rhythmic password to the authentication processor 314.

To authenticate the transmitted rhythmic password, an inverse decoding function is first performed on the DTMF signals transmitted by the DTMF generator 308. More specifically, the DTMF signals are converted to the corresponding transmitted characters, and the character duration and pause duration for each character is calculated through the use of memory 344, counter 342, and clock 340. The DTMF detector signals the authentication processor 314 of the presence/absence of DTMF signals so that the clock 340 and counter 342 can be used to calculate character and pause durations. As shown in Fig. 4, an interface device 326 such as a modem receives the transmitted signal from the modem 324 connected DTMF generator 324, if an interface 324 was used for transmission. The DTMF 'detector 312 receives the signal pairs or composite signal and through the use of band-pass filters within the DTMF detector 312, detects the presence of the tonal pair combination. For example, the transmission of the character "8" required the combination of a low frequency component of 852 Hz and a high frequency component of 1336 Hz. Two band-pass filters set to 852 Hz and 1336 Hz are used to detect the presence of the two tonal components. For each of the 16 frequency/tonal components referenced in Fig. 4, a corresponding band-pass filter is included in the DTMF detector 312. Moreover, it should be understood that the DTMF detector 312 signals to the authentication processor 314, the presence of these two signals for as long as the two tonal components are detected. In this manner, not only is the first character "8" detected, but the duration of the signal is detected. Pauses are likewise detected by operating under the same operational guidelines which define a pause, a transition period, character duration and an end of password entry. A pause for example, if defined as a period of inactivity equal to or greater than 1 second, the authentication processor 314 will process such signal absence or inactivity as a pause. Once the entire rhythmic password is detected, the authentication processor 314 compares the received rhythmic password with those rhythmic passwords store in the authentication database 316. Only upon the exact matching of the characters, and character or pause durations will the authentication processor 314 transmit to the CPU 304, an authentication acknowledgement of the received rhythmic password.

In yet an alternate embodiment of the present invention, the system shown in Fig.3 may be operated in generally the same manner but without the use of clock 320, memory 306 and counter 322. Rather, as keys are pressed on keypad 302, the KCPU 304 will detect the characters and directly control and cause DTMF Generator 308 to generate the tonal frequency components of the entered character for as long as the key is pressed on keypad 302 so as to transmit the character and character duration. Pause durations are determined by noting the absence of tonal components from the DTMF Generator 308. At the receiving end, namely the DTMF Detector 312 and authentication processor 314, the tonal frequency components are detected and the duration of the tones and the duration of pauses between characters are correlated to produce the entered characters and pause and character durations. The detection of the rhythmic password is the same as that previous discussed with regard to Fig. 3.

The foregoing description of the embodiments of the present invention should be considered as illustrative and not as limiting. The disclosed variations in the rhythmic system and method of encoding a password are indicative of the many possible embodiments to the present invention. Various other changes and modifications will occur to those skilled in the art for accomplishing the same result, and for operating in substantially the same way without departing from the true scope of the invention as defined in the claims appended hereto.

## Claims

1. A method of providing security access, by entering a sequence of characters of a rhythmic password to gain access to a secured point of entry, the method comprising the steps of:
storing in an authentication system a rhythmic password comprising a plurality of characters, character durations and pause durations, wherein each of the characters is associated with a character duration, and wherein between selected characters, the rhythmic password has a pause duration;
receiving a sequence of characters from an individual entering the rhythmic password at the point-of-entry;
sensing a character duration for each of the entered characters, wherein the character duration is a function of the time that each character is activated at the point of entry;
sensing a pause duration between selected characters entered at the point-of-entry; and
comparing the received characters and sensed character durations and pause durations with the characters, character durations and pause durations stored in the authentication system to recognize the rhythmic password.

2. The method of claim 1, further comprising the steps of storing the received characters and sensed character durations and pause durations in a first memory at the point-of-entry; and transmitting the characters and character durations and pause durations to an interface device.

3. The method of claim 2, further comprising the step of transmitting data representative of the characters, character durations and pause durations to an authentication processor.

4. The method of claim 3, further comprising the step of retrieving from the authentication system, the stored characters, character durations and pause durations comprising the rhythmic password.

5. The method of claim 4, wherein the step of storing the rhythmic password in the authentication system includes providing an authentication processor with a plurality of sample entries of the rhythmic password for storage.

6. The method of claim 5, further comprising the step of establishing a character duration window for each character and a pause duration window for each pause between selected characters, wherein the character duration window and pause duration window define an acceptable time variation in the character duration and pause duration.

7. The method of claim 6, further comprising the step of modifying the character duration window and pause duration window during a subsequent entry of the rhythmic password.

8. The method of claim 7, wherein the step of modifying the character duration window and pause duration window includes the step of calculating a standard deviation for the character duration of each character and for the pause duration for each pause between selected characters and using the calculated standard deviations as the character duration window and pause duration window.

9. A method of providing security access, wherein a stored rhythmic password composed of one or more characters is used to gain access at a point- of-entry, the method comprising the steps of:
storing in an authentication system a rhythmic password comprising a plurality of characters, character durations and pause durations, wherein each of the characters is associated with a character duration, and wherein between each character, the rhythmic password has a pause duration;
receiving a sequence of characters from an individual entering the rhythmic password at the point-of-entry;
sensing a character duration for each of the entered characters, wherein the character duration is a function of the time that each character is activated at the point of entry;
sensing a pause duration between selected characters entered at the point-of-entry;
transmitting a DTMF signal corresponding to each of the characters of the rhythmic password for a first time duration corresponding the sensed character duration of each character;
waiting a second period of time between the transmission of DTMF signals, the second period of time corresponding to the sensed pause duration between selected characters;
receiving the DTMF signals corresponding to each of the characters of the rhythmic password;
detecting each character comprising the rhythmic password;
detecting from the DTMF signals, the character duration for each of the characters in the rhythmic password;
detecting from the DTMF signals, the pause duration between selected characters; and
if the detected characters, character durations and pause durations of the rhythmic password match the stored characters, character durations, and pause durations of the stored rhythmic password, authenticating the rhythmic password.

10. The method of claim 9, further comprising the steps of storing the received characters and sensed character durations and pause durations in a first memory at the point-of-entry; and transmitting the characters and character durations and pause durations to an interface device.

11. The method of claim 10, further comprising the step of retrieving from the authentication system, the stored characters, character durations and pause durations comprising the rhythmic password.

12. The method of claim 11, wherein the step of storing the rhythmic password in the authentication system includes providing an authentication processor with a plurality of sample entries of the rhythmic password for storage.

13. The method of claim 12, further comprising the step of establishing a character duration window for each character and a pause duration window for each pause between selected characters, wherein the character duration window and pause duration window define an acceptable time variation in the character duration and pause duration.

14. The method of claim 13, further comprising the step of modifying the character duration window and pause duration window during a subsequent entry of the rhythmic password.

15. The method of claim 7, wherein the step of modifying the character duration window and pause duration window includes the step of calculating a standard deviation for the character duration of each character and for the pause duration for each pause between selected characters and using the calculated standard deviations as the character duration window and pause duration window.

16. A security system for providing security access, wherein a stored rhythmic password composed of one or more characters is used to gain access at a point- of-entry, the system comprising;
a keypad having a plurality of keys, the keys operative for continuously transmitting a character for so long as a corresponding character key is activated;
a DTMF generator connected to the keypad and operative for transmitting a DTMF signal representative of a selected character for so as the corresponding key is activated;
a DTMF detector for receiving the DTMF signal, and for detecting characters sent by the DTMF generator; and
an authentication processor in communication with the DTMF detector for calculating a character duration for each entered on the keypad and a pause duration between selected characters.

17. The security system of claim 16, further comprising a memory means for storing and retrieving a rhythmic password, the memory means for storing and retrieving being in communication and control of the authentication processor.

18. The security system of claim 17, further comprising a means for processing and accepting the characters entered on the keypad and for signaling the DTMF generator to transmit a DTMF signal for the duration the key corresponding to a character is activated, the means for processing being in communication with the keypad.

19. The security system of claim 18, further comprising a first counter means in communication with and under the control of the means for processing, for calculating character and pause durations.

20. The security system of claim 19, further comprising a second counter means in communication with the authentication processor for calculating character and pause durations.

21. An authentication system for use in a security system for providing security access, wherein a stored rhythmic password composed of one or more characters is used to gain access at a point-of-entry, the authentication system being in use capable of receiving a DTMF signal from a DTMF generator connected to a keypad, the DTMF signal being representative of a character selected on the keypad for so long as the corresponding key is activated; the authentication system comprising:
a DTMF detector for receiving the DTMF signal and for detecting characters sent by the DTMF generator; and
an authentication processor in communication with the DTMF detector for calculating a character duration for each character entered on the keypad and a pause duration between selected characters.

22. An authentication process for use in a method of providing security access, wherein a stored rhythmic password composed of one or more characters is used to gain access at a point-of-entry, the authentication process being performed in response to receiving a DTMF signal from a DTMF generator connected to a keypad, the DTMF signal being representative of a character selected on the keypad for so long as the corresponding key is activated; the authentication process comprising the steps of:
receiving the DTMF signal and for detecting characters sent by the DTMF generator; and
calculating a character duration for each character entered on the keypad and a pause duration between selected characters.

23. Computer program storage medium storing computer readable information defining computer executable instructions for configuring a computer to perform a method of any of claims 1 to 15 and 22.

24. Computer readable program signal bearing computer readable information defining computer executable instructions for configuring a computer to perform a method of any of claims 1 to 15 and 22.
